# EUROPÄISCHE PATENTANMELDUNG

(11) **EP 1 066 907 A2**
(43) Veröffentlichungstag der Anmeldung: **10.01.2001**
(21) Anmeldenummer: 00810485.3
(22) Anmeldetag: 02.06.2000
(51) Int. Cl.: B23D 61/12

(54) **Sägeblatt**

(30) Priorität: 12.06.1999 DE 19926881
(71) Anmelder: HILTI Aktiengesellschaft, 9494 Schaan (LI)
(72) Erfinder: Blessing, Matthias, 6820 Frastanz (AT); Fey, Michael, 83071 Stephanskirchen (DE)
(74) Vertreter: Wildi, Roland

(57) **Zusammenfassung**

Ein Sägeblatt zur Erzeugung einer Trennfuge in einem Werkstoff umfasst ein Stammblatt (2), das an seiner im Betrieb dem Werkstoff zugewandten Stirnfläche Zerspanungselemente (7) aufweist, deren Eingriffskanten (8) den Werkstoff spanend bearbeiten. An wenigstens einer der Flachseiten (5, 6) des Stammblattes (2) ist eine messerartige Schneide (12, 13) vorgesehen, die sich wenigstens über einen Bereich des Verlaufs der Stirnfläche des Stammblattes (2) erstreckt. Die messerartige Schneide (12, 13) ist an wenigstens einer blattartigen Klinge (10, 11) angeordnet, die in Nachbarschaft zur Stirnfläche des Stammblattes (2) verläuft. Wenigstens im Bereich der messerartigen Schneide (12, 13) überragt die blattartige Klinge (10, 11) die Eingriffskanten (8) der Zerspanungselemente (7) seitlich.

## Beschreibung

Die Erfindung betrifft ein Sägeblatt zur Erzeugung einer Trennfuge in einem Werkstoff gemäss dem Oberbegriff des Patentanspruchs 1.

Zum Trennen von festen Werkstoffen, wie beispielsweise Holz, Kunststoff oder auch Metall, werden Sägen eingesetzt, deren Sägeblätter mit Sägezähnen ausgestattet sind, die im Werkstoff spanend eine Trennfuge erzeugen. Die Sägen können beispielsweise Kreissägen, bei denen die Sägeblätter rotierend angetrieben sind, Bandsägen, bei denen das Sägeblatt kontinuierlich translatorisch angetrieben ist, oder Stichsägen sein, bei denen die Sägeblätter in einer oszilierenden Bewegung angetrieben werden. Die Schnittbewegung kann, wie beispielsweise bei einer Pendelhubstichsäge, noch zusätzlich durch eine Pendelhubbewegung unterstützt sein. Dabei kann es sich bei den Sägen um handgeführte Geräte, wie beispielsweise Stichsägen oder Handkreissägen, oder um semi-stationäre oder stationäre Geräte, wie beispielsweise Tischkreissägen, Bandsägen, Gattersägen oder dergleichen, handeln. Die Hauptanforderung beim Sägen besteht üblicherweise darin, den Sägeschnitt möglichst schnell voranzutreiben. Um dieser Hauptanforderung gerecht zu werden, sind die meisten bekannten Sägeblätter hinsichtlich des Sägefortschritts optimiert. Sägeblätter mit einem schnellen Sägefortschritt führen jedoch vielfach zu rauhen Schnittflächen und ausgerissenen Schnittkanten.

Andererseits besteht eine weitere Anforderung beim Sägen gerade darin, die Schnittoberfläche möglichst glatt auszubilden und, insbesondere bei faserhaltigen Werkstoffen, wie beispielsweise Holz, ausrissfreie bzw. gratfreie Schnittkanten zu erzeugen. Diesen Anforderungen kann bis zu einem gewissen Mass zwar auch durch eine entsprechende Optimierung der Sägezähne entsprochen werden. Allerdings gehen derartige Optimierungen üblicherweise auf Kosten des Sägefortschritts. Aus Gründen des schnellen Sägefortschrittes nimmt man daher beim Sägen zunächst rauhe Schnittflächen und ausgerissene Schnittkanten in Kauf. In einem nachgeschalteten Arbeitsschritt wird dann die Qualität der Schnittflächen und der Schnittkanten verbessert. Dazu werden die rauhe Oberfläche und die ausgerissene Schnittkante beispielsweise durch Abhobeln, Fräsen oder Schleifen bearbeitet. Für die weitere Bearbeitung der Schnittflächen und der Schnittkanten sind zusätzliche Werkzeuge und Maschinen erforderlich. Bei der Bemessung des Werkstücks muss dieser Nachbearbeitung durch ein Bearbeitungsaufmass Rechnung getragen werden, damit das fertige Werkstück die richtigen Abmessungen aufweist. Ausserdem wird durch den zusätzlichen Arbeitsschritt der zeitliche und finanzielle Aufwand für die Erstellung von akzeptablen Sägeschnitten vergrössert.

Aufgabe der vorliegenden Erfindung ist es daher, diesen Nachteilen des Stands der Technik abzuhelfen. Es soll ein Sägeblatt geschaffen werden, welches die Erstellung von akzeptablen Sägeschnitten ermöglicht, ohne die Schnittflächen bzw. die Schnittkanten nacharbeiten zu müssen. Der für die Erstellung von aktzeptablen Sägeschnitten erforderliche zeitliche und finanzielle Gesamtaufwand soll verringert sein. Die erfindungsgemässe Auslegung soll dabei auf Sägeblätter für Sägen mit rotierendem, oszilierendem oder kontinuierlich translatorischem Antrieb anwendbar sein.

Die Lösung dieser Aufgaben besteht in einem Sägeblatt mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Das erfindungsgemässe Sägeblatt zur Erzeugung einer Trennfuge in einem Werkstoff umfasst ein Stammblatt, das an seiner im Betrieb dem Werkstoff zugewandten Stirnfläche Zerspanungselemente aufweist, deren Eingriffskanten den Werkstoff spanend bearbeiten. An wenigstens einer der Flachseiten des Stammblattes ist eine messerartige Schneide vorgesehen, die sich wenigstens über einen Bereich des Verlaufs der Stirnfläche des Stammblattes erstreckt. Die messerartige Schneide ist an wenigstens einer blattartigen Klinge angeordnet, die in Nachbarschaft zur Stirnfläche des Stammblattes verläuft. Wenigstens im Bereich der messerartigen Schneide überragt die blattartige Klinge die Eingriffskanten der Zerspanungselemente seitlich.

Die Erfindung kombiniert ein Zerspanungselemente aufweisendes Stammblatt mit wenigstens einer messerartigen Schneide, die an einer blattartigen Klinge vorgesehen ist. Die Zerspanungselemente können Sägezähne, Schneidsegmente, feilenartige Raspelgeometrien, Schleifkörper oder ähnliche Elemente sein. Die wenigstens bereichsweise vorgesehene messerartige Schneide erzeugt im Werkstoff eine Kerbe. Die Zerspanungselemente, beispielsweise Sägezähne mit Querschneiden und Spanräumen, dienen der Zerkleinerung und Abfuhr des seitlich an die Kerbe anschliessenden Materials. Diese Kombination der Wirkungsweisen von messerartigen Schneiden und Zerspanungselementen führt beim Sägen an dem an die Schneiden angrenzenden Werkstückteil zu Schnittflächen und Schnittkanten, die eine sehr gute Qualität aufweisen. Die messerartige Schneide rotiert, osziliert oder vollführt eine kontinuierliche translatorische Bewegung gemeinsam mit dem die Zerspanungselemente tragenden Stammblatt. Dabei bearbeitet die Schneide die angrenzende Schnittfläche und führt zu einer sehr glatten Schnittfläche. Durch diese schneidende Bearbeitung der Schnittfläche werden auch weitgehend ausrissfreie Schnittkanten erzielt. Die mit einem erfindungsgemässen Sägeblatt erreichbare Oberflächenqualität ist in der Regel höher als mit konventionellen Sägeblättern in einem zweistufigen Arbeitsverfahren. Die erzielbaren Schnittgeschwindigkeiten sind zwar nicht mehr ganz so hoch wie bei den aus dem Stand der Technik bekannten konventionellen Sägeblättern. Indem das erfindungsgemässe Sägeblatt jedoch den Säge- und den Nachbearbeitungsvorgang in einem Arbeitsschritt vereint, ist der für die Erzielung einer akzeptablen Schnittfläche erforderliche zeitliche Gesamtaufwand reduziert. Das gesägte Werkstück muss nicht mehr in verschiedene Gerätschaften eingespannt werden, um es für die erforderliche Oberflächennachbearbeitung zu fixieren. Da der Nachbearbeitungsschritt entfällt, muss bei der Bemassung des Werkstücks auch kein Bearbeitungsaufmass vorgesehen werden, und zusätzliche Geräte oder Werkzeuge für die Oberflächennachbearbeitung entfallen, was sich insgesamt auch vorteilhaft auf die Kosten auswirkt.

Indem das Sägeblatt im Bereich der Stirnfläche des Stammblattes eine Gesamtbreite aufweist, die grösser ist als eine korrespondierende Gesamtbreite an einem gegenüber den Zerspanungselementen und der Stirnfläche zurückgesetzten Abschnitt des Stammblatts, besteht im Betrieb innerhalb des Sägespalts ein Freiraum zwischen einem grossen Teil des Sägeblattes und den Schnittflächen. Der Freiraum dient der Verringerung der beim Sägevorgang auftretenden Reibung. Dadurch ist der für den Sägevorgang erforderliche Kraftaufwand reduziert. Im Anwendungsfall eines Sägeblattes für eine Stichsäge erleichtert der Freiraum auch die Erstellung von gekrümmten Sägeschnitten.

In einer Variante der Erfindung ist die Schneidkante der messerartigen Schneide gegenüber einer Aussenfläche der blattartigen Klinge in Richtung der Zerspanungselemente versetzt angeordnet. Bei einem derartigen äusseren Anschliff befindet sich die Schneidkante der messerartigen Schneide nicht mehr an der äussersten Kante des Sägeschnittes. Dadurch muss der Werkstoff, beispielsweise Holz, über den äusseren Anschliff verdrängt werden. Daraus resultiert an der Schnittoberfläche eine Oberflächenverdichtung, die sich vorteilhaft auf die Qualität der Oberfläche auswirkt.

Die messerartige Schneide kann sich nur über einen Teilbereich der Stirnfläche des Stammblatts erstrecken oder durchgehend ausgebildet sein. Ihr Verlauf kann exakt dem Verlauf der Stirnfläche des Stammblatts entsprechen, beispielsweise kann die messerartige Schneide geradlinig verlaufen. In einer vorteilhaften Ausführungsvariante der Erfindung kann die messerartige Schneide beispielsweise einen Wellenschliff aufweisen, der senkrecht zur gemessenen Breite verläuft. Der Wellenschliff wirkt sich vorteilhaft auf die Schnittleistung aus, da die Vorschubkraft auf die gerade in Eingriff mit dem Werkstück befindlichen, kleineren Schneidenabschnitte an den Wellenbergen konzentriert ist. In einer zweckmässigen Ausführungsvariante sind bei einer messerartigen Schneide mit Wellenschliff die Eingriffskanten der Zerspanungselemente jeweils im Bereich der Wellenberge angeordnet. Die Schneidkanten an den Wellenbergen der messerartigen Schneide bearbeiten den Werkstoff schneidend, während das von den Schnittflächen abgetragene Material von den angrenzenden Zerspanungselementen zerkleinert wird.

In einer Ausführungsvariante des Sägeblatts sind das Stammblatt und die blattartige Klinge als separate Teile ausgebildet. Im Fall einer rotierenden Kreissäge kann die messerartige Schneide beispielsweise an einem separaten Blatt angeordnet sein, das parallel zur Seitenfläche des Stammblatts angeordnet ist. Die messerartige Schneide kann entlang des gesamten Umfangs des separaten Blatts verlaufen oder auch nur bereichsweise ausgebildet sein. Das die messerartige Schneide tragende Blatt kann im Betrieb synchron oder asynchron mit dem Stammblatt rotieren.

In einer weiteren Variante der Erfindung sind das Stammblatt und die blattartige Klinge mit der messerartigen Schneide beispielsweise durch Löten fest miteinander verbunden. Diese Variante des Sägeblatts ist insbesondere bei Sägeblättern für Stichsägen oder für Bandsägen von Vorteil.

Während bei einem Sägeblatt mit einseitig angeordneter messerartiger Schneide die der Schneide zugewandte Schnittfläche nach dem Sägevorgang bereits mit hoher Qualität vorliegt, weist die an die Zerspanungselemente angrenzende Schnittfläche eine relativ rauhe Oberfläche auf, wie sie auch mit den Schneidblättern des Stands der Technik erzielbar ist. Für viele Anwendungen reicht es aus, eine der Schnittflächen unmittelbar mit hoher Qualität herzustellen. Die messerartige Schneide kann dabei rechts oder links der Zerspanungselemente verlaufen. Damit gleichzeitig beide Schnittflächen mit einer hohen Oberflächenqualität herstellbar sind, ist in einer Variante der Erfindung vorgesehen, an beiden Flachseiten des die Zerspanungselemente aufweisenden Stammblatts messerartige Schneiden anzuordnen. Die Schneiden können dabei beispielsweise abwechselnd entlang der einen oder der anderen Flachseite des Stammblatts verlaufen. Dabei können die beiden messerartigen Schneiden gleichartig oder voneinander verschieden ausgebildet sein. Im Fall von durchgehenden messerartigen Schneiden kann beispielsweise die messerartige Schneide an der einen Flachseite einen geradlinigen Verlauf aufweisen, während die zweite mit einem Wellenschliff versehen ist. Die messerartigen Schneiden erzeugen an beiden Seiten des Stammblatts Kerben im Werkstoff. Die zwischen den beiden Schneiden angeordneten Zerspanungselemente zerkleinern das Material zwischen den beiden Kerben. Das zerkleinerte Material wird über die Spanräume aus dem Eingriffsbereich des Sägeblattes transportiert.

In einer Ausführungsvariante besteht das Sägeblatt aus einem die Zerspanungselemente tragenden Stammblatt und einer oder zwei messerartigen Schneiden, die an blattartigen Klingen verlaufen, die an die beiden Flachseiten des Stammblatts angrenzen. Die separaten Teile sind beispielsweise durch Löten fest miteinander verbunden. Bei dieser Variante des Sägeblatts werden das Stammblatt und die messerartigen Schneiden getrennt hergestellt und erst danach miteinander verbunden. Beispielsweise sind die messerartigen Schneiden an Flachteilen vorgesehen, die derart miteinander verbunden sind, dass sie eine im Querschnitt V-förmige Aufnahmetasche für das die Zerspanungselemente tragende Stammblatt bilden. Auf diese Weise ist das Stammblatt seitlich und axial abgestützt.

Bei einem alternativen Ausführungsbeispiel sind die messerartigen Schneiden integral mit dem die Zerspanungselemente tragenden Stammblatt ausgebildet. Dazu wird beispielsweise zunächst ein Rohling mit der erforderlichen Einspanngeometrie aus einem Metallteil ausgestanzt. Die Spanräume zwischen den Zerspanungselementen und die Geometrie der messerartigen Schneide werden dann kalt oder halbwarm in den Rohling eingeprägt. Bei Bedarf wird die messerartige Schneide nach einer Wärmebehandlung noch nachgeschliffen. Ein erfindungsgemässes Sägeblatt kann aus einem einzigen derartigen integralen Bauteil bestehen. In einer weiteren Variante der Erfindung können beispielsweise zwei derartige integrale Bauteile miteinander verbunden sein. Die Verbindung der beiden integralen Bauteile erfolgt dabei derart, dass die Zerspanungselemente der beiden Bauteile einander zugekehrt und nach aussen im wesentlichen von den Rückflächen der Bauteile abgedeckt sind. Die Zerspanungselemente können dabei einander gegenüberliegend angeordnet sein oder auch auf Lücke stehen.

Für die Bearbeitung von weicheren Werkstoffen, beispielsweise weicheren Holzarten wie Pappel oder Fichte und dergleichen, erweist es sich von Vorteil, wenn die messerartige Schneide die Eingriffskante der Zerspanungselemente überragt. Für die Bearbeitung von harten Werkstoffen, beispielsweise von harten Hölzern, furniertem Sperrholz oder kunstoffbeschichteten Flachpressplatten erweisen sich Sägeblätter von Vorteil, bei denen die messerartige Schneide auf gleicher Höhe der Eingriffskanten der Zerspanungselemente angeordnet ist oder diesen nacheilt.

Im folgenden wird die Erfindung unter Bezugnahme auf in den Fig. dargestellte Ausführungsbeispiele näher erläutert. Es zeigen in zum Teil schematischer Darstellung:
- Fig. 1: eine perspektivische Ansicht eines ersten Ausführungsbeispiels des erfindungsgemässen Sägeblatts;
- Fig. 2: einen Querschnitt des Sägeblattes aus Fig. 1;
- Fig. 3: einen Querschnitt eines modifizierten Sägeblatts; und
- Fig. 4: eine perspektivische Ansicht eines weiteren Ausführungsbeispiels eines erfindungsgemässen Sägeblattes.

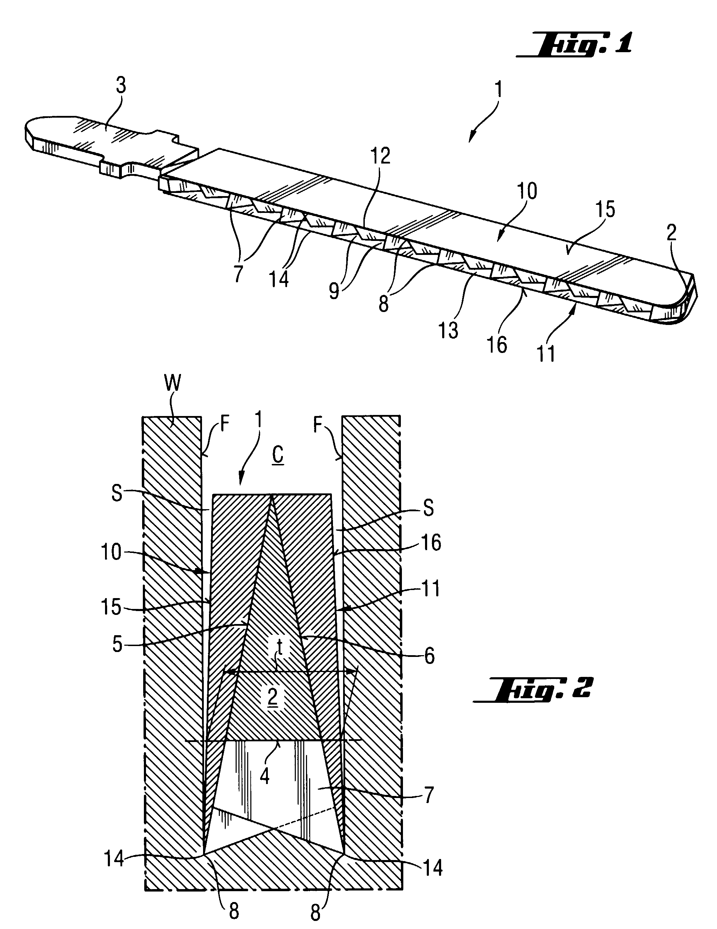

Das in den Fig. 1 und 2 dargestellte Sägeblatt für eine Stichsäge trägt gesamthaft das Bezugszeichen 1. Es weist ein Stammblatt 2 auf, das mit Anschlussmitteln 3 zum Einspannen in eine Aufnahmevorrichtung der Stichsäge ausgestattet ist. An seiner im Betrieb einem Werkstück W zugekehrten Stirnfläche 4 ist das Stammblatt 2 mit Zerspanungselementen 7 versehen. Die Zerspanungselemente 7 sind beispielsweise als Sägezähne mit Querschneiden und Spanräumen 9 ausgebildet. Die gegenüber der Stirnfläche 4 des Stammblattes 2 am weitesten vorstehenden Eingriffskanten der Sägezähne 7 tragen das Bezugszeichen 8. Zwei messerartige Schneiden 12, 13 sind an blattartigen Klingen 10, 11 vorgesehen, die entlang den Flachseiten 5, 6 des Stammblattes 2 verlaufen. Die messerartigen Schneiden 12, 13 weisen gemäss dem dargestellten Ausführungsbeispiel jeweils eine durchgehende Schneidkante 14 auf, die auf gleicher Höhe wie die Eingriffskanten 8 der als Sägezähne ausgebildeten Zerspanungselemente 7 verläuft. Bei einer modifizierten Variante der Erfindung können die Schneidkanten 14 der messerartigen Schneiden 12, 13 auch gegenüber den Eingriffskanten 8 der Sägezähne 7 einen Überstand aufweisen. Ein derartig ausgebildetes Sägeblatt 1 eignet sich insbesondere zum Schneiden von weicheren Materialien, beispielsweise von Weichholz. In einer Abwandlung der Erfindung, die beispielsweise zum Sägen von harten Materialien, beispielsweise von Harthölzern, besonders geeignet ist, können die Schneidkanten 14 der messerartigen Schneiden 12, 13 auch den Eingriffskanten 8 der Sägezähne 7 nacheilen.

Gemäss Fig. 2 sind die Aussenflächen 15, 16 der beiden blattartigen Klingen 10, 11 zueinander geneigt. Dadurch besitzt das Sägeblatt 1 im Bereich der Stirnfläche 4 des Stammblatts 2 eine Gesamtbreite t, die grösser ist als die Breite in einem gegenüber der Stirnfläche 4 zurückgesetzten Bereich des Sägeblattes 1. Innerhalb eines Sägespalts C in einem Werkstoff W ergibt sich dadurch zwischen den Schnittflächen F und den Aussenflächen 15, 16 ein Freiraum S, der sich über einen wesentlichen Teil des innerhalb des Sägespalts C verlaufenden Sägeblattes 1 erstreckt. Das Sägeblatt kann beispielsweise in einem von den Eingriffskanten der Zerspanungselemente beabstandeten Bereich eine sprunghafte Reduktion der Gesamtbreite aufweisen. Gemäss der Darstellung in Fig. 2 weist das Sägeblatt 1 eine Gesamtbreite auf, die sich mit zunehmendem Abstand von den Eingriffkanten 8 der Zerspanungselemente 7 kontinuierlich verringert.

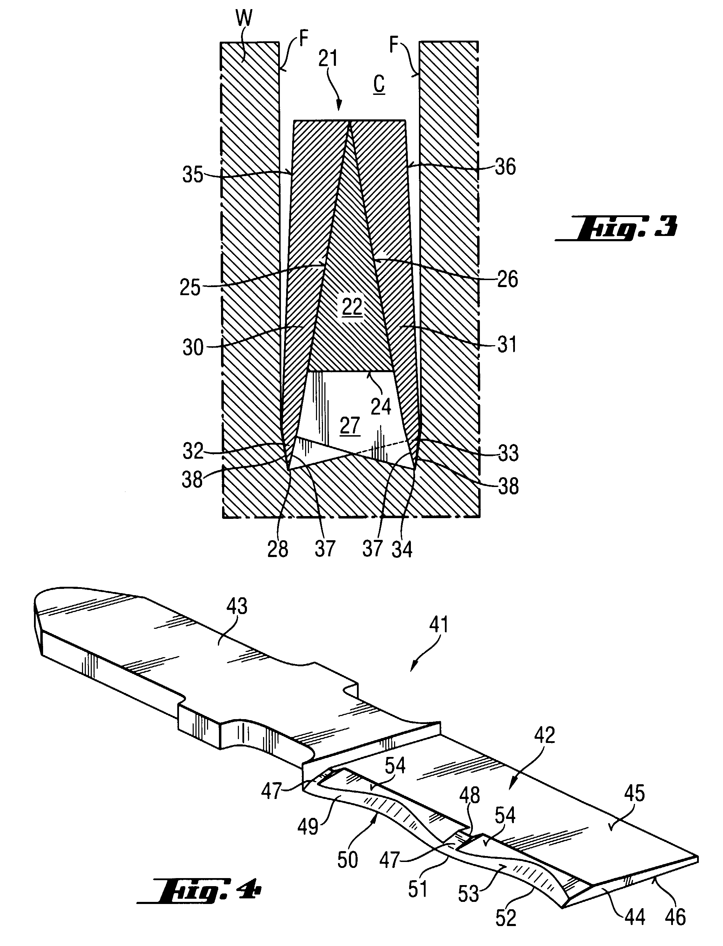

Das in Fig. 3 im Schnitt dargestellte Ausführungsbeispiel des erfindungsgemässen Sägeblatts ist gesamthaft mit dem Bezugszeichen 21 versehen. Es weist wiederum ein Stammblatt 22 auf, dessen im Betrieb einem Werkstück W zugewandte Stirnfläche 24 Zerspanungselemente 27 trägt, die wiederum beispielsweise als Sägezähne mit Eingriffskanten 28 ausgebildet sind. Entlang beider Flachseiten 25, 26 des Stammblatts 22 verlaufen messerartige Schneiden 32, 33, die an blattartigen Klingen 30, 31 angeordnet sind. Zum Unterschied von dem in Fig. 1 und 2 dargestellten Ausführungsbeispiel sind die messerartigen Schneiden 32, 33 im Bereich ihrer Schneidkanten 34 angeschliffen. Dabei können die messerartigen Schneiden 32, 33 einen inneren 37 oder einen äusseren Anschliff 38 aufweisen oder, wie in Fig. 3 angedeutet, beidseitig angeschliffen sein. Durch den beidseitigen Anschliff 37, 38 verlaufen die Schneidkanten 34 der messerartigen Schneiden 32, 33 nicht mehr an den äussersten Kanten des Sägespalts C. Während des Sägevorgangs muss daher der Werkstoff W, beispielsweise Holz, über die äusseren Anschliffe 38 verdrängt werden. Daraus resultiert an den Schnittoberflächen F eine Oberflächenverdichtung, die sich vorteilhaft auf die Qualität der Oberfläche auswirkt.

Wie in den Fig. 1 - 3 angedeutet ist, besteht das Sägeblatt 1 bzw. 21 beispielsweise aus drei Einzelteilen, einem Stammblatt 2 bzw. 22 und jeweils zwei die messerartigen Schneiden 12, 13 bzw. 32, 33 aufweisenden, blattartigen Klingenteilen 10, 11 bzw. 30, 31. Die Klingenteile 10, 11 bzw. 30, 31 sind dabei derart angeordnet, dass sie eine V-förmige Aufnahmetasche für das Stammblatt 2, 22 bilden. Die einzelnen Teile können lose vorliegen oder beispielsweise durch Verlöten fest miteinander verbunden sein.

Fig. 4 zeigt ein weiteres Ausführungsbeispiel eines erfindungsgemässen Sägeblattes, das gesamthaft das Bezugszeichen 41 trägt. Zum Unterschied von den anhand der Fig. 1 - 3 erläuterten Sägeblätter ist das Sägeblatt 41 einteilig ausgebildet. Es umfasst ein Stammblatt 42 mit Anschlussmitteln 43 zum Einspannen in eine Stichsäge. Eine messerartige Schneide 49 ist unmittelbar an der im Betrieb mit einem Werkstück in Eingriff befindlichen Schmalseite 44 des Stammblattes 42 angeordnet. Die messerartige Schneide 49 weist einen Wellenschliff mit Wellenbergen 51 und Wellentälern 52 auf. Im Bereich der Wellenberge 51 sind am Stammblatt 42 Zerspanungselemente 47 ausgebildet, deren Eingriffkanten 48 gegenüber der Schneidkante 50 der messerartigen Schneide 49 nacheilen. Wie in der Darstellung angedeutet, ist die wellenartig verlaufende Schneide 49 mit einem Anschliff 53 versehen. Mit zunehmendem Abstand von der messerartigen Schneide 49 verjüngt sich das Sägeblatt 41 in seiner Breite. Zur Herstellung eines Sägeblatts 41 gemäss Fig. 4 wird beispielsweise zunächst ein Rohling mit der erforderlichen Einspanngeometrie 43 aus einem Metallteil ausgestanzt. Die Spanräume 54 zwischen den Zerspanungslementen 47 und die Geometrie der messerartigen Schneide 49 wird dann kalt oder halbwarm in eine der Flachseiten 45, 46 des Rohling eingeprägt. Bei Bedarf wird die messerartige Schneide 49 nach einer Wärmebehandlung noch nachgeschliffen. Eine derartiges, einteilig ausgebildetes Sägeblatt 41 kann beispielsweise unmittelbar verwendet werden. Es kann auch mit einem weiteren, beispielsweise spiegelverkehrt ausgebildeten, einteiligen Sägeblatt verbunden werden, damit beim Sägen gleichzeitig beide Schnittflächen mit hoher Qualität herstellbar sind. Dabei können die Zerspanungselemente an den Stammblättern einander gegenüberliegen oder in Längsrichtung gegeneinander versetzt angeordnet sein.

Die Erfindung wurde am Beispiel von Sägeblättern für eine handgeführte Stichsäge erläutert. Es versteht sich, dass die erfindungsgemässen Sägeblättern auch bei semi-stationären und stationären Geräten, wie z. B. Kreissägen, Bandsägen, Gattersägen und dergleichen, und auch bei händisch bedienbaren Bügelsägen und dergleichen einsetzbar sind. Dabei ist die Geometrie des Sägeblatts, seiner Zerspanungselemente und der messerartigen Schneiden nicht allein auf die beschriebenen Geometrien beschränkt. Vielmehr können die Sägeblätter mit ein oder zwei messerartigen Schneiden ausgestattet sein. Die messerartige Schneide kann integral am Stammblatt ausgebildet sein oder an einem mit der Seitenfläche des Stammblattes verbundenen Klingenteil angeordnet sein. Dabei kann der Verlauf der messerartigen Schneiden beispielsweise geradlinig oder wellenförmig sein. Die messerartigen Schneiden können durchgehend vorgesehen sein oder sich nur über Teilbereiche des Stammblattes erstrecken. Dabei können die Schneiden auch abwechselnd entlang der einen oder der anderen Flachseite verlaufen. Im Fall von zwei messerartigen Schneiden kann eine der Schneiden beispielsweise geradlinig dem Verlauf der Stirnfläche des Stammblattes folgen, während die zweite Schneide einen Wellenschliff aufweist. Die Schneiden können einseitig oder beidseitig angeschliffen sein. Bei zwei Schneiden kann beispielsweise auch eine der Schneiden ohne Anschliff vorliegen. Die Schneidkanten der messerartigen Schneiden können je nach vorgesehenem Einsatz des Sägeblatts gegenüber den Schneidkanten der Sägezähne vorauseilen, auf gleicher Höhe verlaufen oder auch nacheilen.

## Patentansprüche

1. Sägeblatt zur Erzeugung einer Trennfuge (C) in einem Werkstoff (W) mit einem Stammblatt (2; 22; 42), das an seiner im Betrieb dem Werkstoff (W) zugewandten Stirnfläche (4; 24; 44) Zerspanungselemente (7; 27; 47) aufweist, deren Eingriffskanten (8; 28; 48) den Werkstoff (W) spanend bearbeiten, **dadurch gekennzeichnet**, dass an wenigstens einer der Flachseiten (5, 6; 25, 26; 46) des Stammblattes (2; 22; 42) eine messerartige Schneide (12, 13; 32, 33; 49) vorgesehen ist, die sich wenigstens über einen Bereich des Verlaufs der Stirnfläche (4; 24; 44) des Stammblattes (2; 22; 42) erstreckt und an wenigstens einer blattartigen Klinge (10, 11; 30, 31) angeordnet ist, welche die Eingriffkanten (8; 28; 48) der Zerspanungselemente (7; 27; 47) wenigstens im Bereich der messerartigen Schneide (12, 13; 32, 33; 49) seitlich überragt.

2. Sägeblatt nach Anspruch 1, dadurch gekennzeichnet, dass eine im Bereich der Stirnfläche (4; 24; 44) des Stammblattes (2; 22; 42) gemessene Gesamtbreite (t) grösser ist als eine Gesamtbreite an einem gegenüber den Zerspanungselementen (7; 27; 47) und der Stirnfläche (4; 24; 44) zurückgesetzten Abschnitt des Stammblatts (2; 22; 42).

3. Sägeblatt nach Anspruch 1 oder 2, dadurch gekennzeichnet, dass die messerartige Schneide (32, 33) gegenüber einer Aussenfläche (35, 36) der blattartigen Klinge (30, 31) in Richtung der Zerspanungselemente (27) versetzt verläuft.

4. Sägeblatt nach Anspruch 2 oder 3, dadurch gekennzeichnet, dass die messerartige Schneide (49) einen wellenartigen Verlauf aufweist, der sich im wesentlichen senkrecht zur gemessenen Breite erstreckt.

5. Sägeblatt nach Anspruch 4, dadurch gekennzeichnet, dass die Eingriffskanten (48) der Zerspanungselemente (47) jeweils im Bereich der Wellenberge (51) angeordnet sind.

6. Sägeblatt nach einem der vorangehenden Ansprüche, dadurch gekennzeichnet, dass das Stammblatt (2; 22) und die blattartige Klinge (10, 11; 30, 31) separate Teile sind.

7. Sägeblatt nach Anspruch 6, dadurch gekennzeichnet, dass das Stammblatt (2; 22) und die blattartige Klinge (10, 11; 30, 31) beispielsweise durch Löten fest miteinander verbunden sind.

8. Sägeblatt nach einem der vorangehenden Ansprüche, dadurch gekennzeichnet, dass an beiden Flachseiten (5, 6; 25, 26) des Stammblatts (2; 22) blattartige Klingen (10, 11; 30, 31) mit messerartigen Schneiden (12, 13; 32, 33) angeordnet sind.

9. Sägeblatt nach Anspruch 7 und 8, dadurch gekennzeichnet, dass die einander zugekehrten Innenflächen der beiden die messerartigen Schneiden (12, 13; 32, 33) aufweisenden, blattartigen Klingen (10, 11; 30, 31) eine im Querschnitt V-förmige Aufnahmetasche für das die Zerspanungselemente (7; 27) tragende Stammblatt (2; 22) begrenzen.

10. Sägeblatt nach einem der Ansprüche 1 - 5, dadurch gekennzeichnet, dass die messerartigen Schneiden (49) integral mit dem die Zerspanungselemente (47) tragenden Stammblatt (42) ausgebildet sind.
